# FASCICULE DE BREVET EUROPEEN

(11) **EP 0 589 758 B1**
(45) Date de publication et mention de la délivrance du brevet: **30.10.1996**
(21) Numéro de dépôt: 93402263.3
(22) Date de dépôt: 16.09.1993
(51) Int. Cl.: G02B 27/00

(54) **Combineur holographique escamotable, notamment pour aéronef**
Besonders für Flugzeuge geeigneter wegklappbarer holographischer Strahlkombinierer
Holographic, retractable combiner, specially for aircraft

(30) Priorité: 21.09.1992 FR 9211193
(43) Date de publication de la demande: 30.03.1994
(73) Titulaire: SEXTANT AVIONIQUE, F-92360 Meudon-la-Forêt (FR)
(72) Inventeur: Dupin, Catherine, Cabinet BALLOT-SCHMIT, F-75116 Paris (FR); Darrieux, Jean Marc Cabinet BALLOT-SCHMIT, F-75116 Paris (FR)
(74) Mandataire: Ballot, Paul Denis Jacques

(56) Documents cités:
- WO-A-87/01090
- GB-A- 2 174 213
- US-A- 4 188 090
- US-A- 4 775 218

## Description

La présente invention concerne un combineur holographique destiné à être monté sur les aéronefs.

De tels combineurs ont pour rôle essentiel de présenter, devant les yeux d'un pilote, des images lumineuses collimatées à l'infini en superposition sur le paysage extérieur.

Ces images sont produites en relief en utilisant les interférences entre deux faisceaux laser, selon le principe connu de l'holographie.

Les images sont issues d'un projecteur disposé en amont du combineur et dont la position relative par rapport à une glace holographique, lorsqu'elle est opérationnelle, est fixe.

De tels combineurs sont maintenus et positionnés par l'intermédiaire d'un dispositif mécanique et généralement montés en plafond dans la cabine de pilotage de l'aéronef et cela de façon escamotable. Des exemples de tels combineurs sont divulgués dans les documents US-A-4 775 218 et US-A-4 188 090.

En effet le système de collimation d'images holographiques n'étant utilisé que pendant quelques phases de vol, le combineur doit pouvoir se ranger le reste du temps dans une zone qui altère au minimum le champ de vision extérieur du pilote.

Or, à l'heure actuelle, les dispositifs mécaniques de maintien et de positionnement ne permettent pas l'escamotage intégral des combineurs, une partie du mécanisme restant apparent dans le champ de vision du pilote, même une fois rangé.

En effet, ces dispositifs connus sont constitués par deux bras disposés de part et d'autre de la glace holographique et sont reliés à une partie fixe supérieure du plafond de la cabine.

Il est important de noter que dans ce type de combineur connu, la glace holographique est solidaire des bras qui la supporte, ce qui a pour inconvénient de constituer un ensemble de grand encombrement, pénalisant lors du rangement de l'ensemble d'où la difficulté d'escamotage complet. De plus, la longueur engendrée par cette succession d'éléments peut obliger le pilote à avoir un mouvement de recul pour autoriser leur passage au moment de rangement ou d'une mise en position opérationnelle du combineur. Un tel mouvement peut s'avérer néfaste au pilotage de l'appareil.

Par ailleurs, des poignées latérales sont prévues de part et d'autre de la glace holographique en vue de constituer des prises nécessaires aux manoeuvres sans toucher la glace holographique.

On comprend aisément qu'un tel appareillage est néfaste à une bonne visibilité et s'ajoute aux difficultés d'escamotage complet du combineur.

En effet, plus le nombre d'organes constitutifs du combineur est important, plus le masquage du champ visuel sera important en position opérationnelle comme en position rangée, par la difficulté même d'escamotage complet dans ce dernier cas.

La présente invention a pour but de remédier à ces inconvénients et donc d'obtenir les fonctions suivantes :
. assurer la position opérationnelle du combineur avec une bonne répétitivité de mise en place en créant le minimum de masque visuel ;
. assurer le rangement du combineur hors du champ de vision extérieur du pilote ;
. assurer l'escamotage vers l'avant du combineur en cas de chocs lorsqu'il est en position opérationnelle.

A cet effet, l'invention concerne un combineur holographique escamotable, notamment pour aéronef du type comportant une glace holographique mobile placée devant les yeux du pilote et destinée à la présentation d'images lumineuses collimatées à l'infini en superposition sur le paysage extérieur et issues d'un projecteur disposé en amont dudit combineur, laquelle glace holographique est reliée à une partie fixe de l'aéronef par l'intermédiaire d'un support articulé assurant son maintien et son positionnement, caractérisé en ce que le support de glace holographique est constitué par un bras de liaison latéral unique comportant une première articulation supérieure le reliant par l'une de ses extrémités à la partie de l'aéronef et une seconde articulation inférieure reliant ledit bras par son autre extrémité à un côté de la glace holographique de manière à obtenir un escamotage complet de l'ensemble par rotation de la glace holographique sur elle-même autour de l'articulation inférieure du bras, effectuée préalablement ou simultanément à la rotation dudit bras autour de son articulation supérieure, jusqu'à ce qu'il se confonde avec le côté latéral de la glace holographique d'une part et qu'il soit complètement relevé hors du champ de vision extérieur du pilote d'autre part, un tel reploiement du bras et de la glace pour une position rangée et inversement leur déploiement pour une position opérationnelle s'effectuant par l'intermédiaire d'une poignée de préhension également unique apte à être manoeuvrée d'une seule main.

L'invention sera mieux comprise et d'autres caractéristiques de celle-ci seront mises en évidence à l'aide de la description qui suit, en référence aux dessins schématiques annexés, illustrant, à titre d'exemple non limitatif, comment l'invention peut-être réalisée et dans lesquels :
La figure 1 est une vue en perspective partielle d'une cabine de pilotage comportant un combineur escamotable selon l'invention ;
la figure 2 est une vue frontale issue de la figure 1 ;
la figure 3 est une vue latérale du combineur placé par rapport au pilote et montrant une cinématique de fonctionnement entre une position rangée et une position opérationnelle ;
la figure 4 est une vue schématique du combineur en position opérationnelle ;
la figure 5 est une vue en coupe longitudinale selon la figure 4, à l'échelle agrandie et,
la figure 6 est une vue de détail à échelle agrandie de la figure 5.

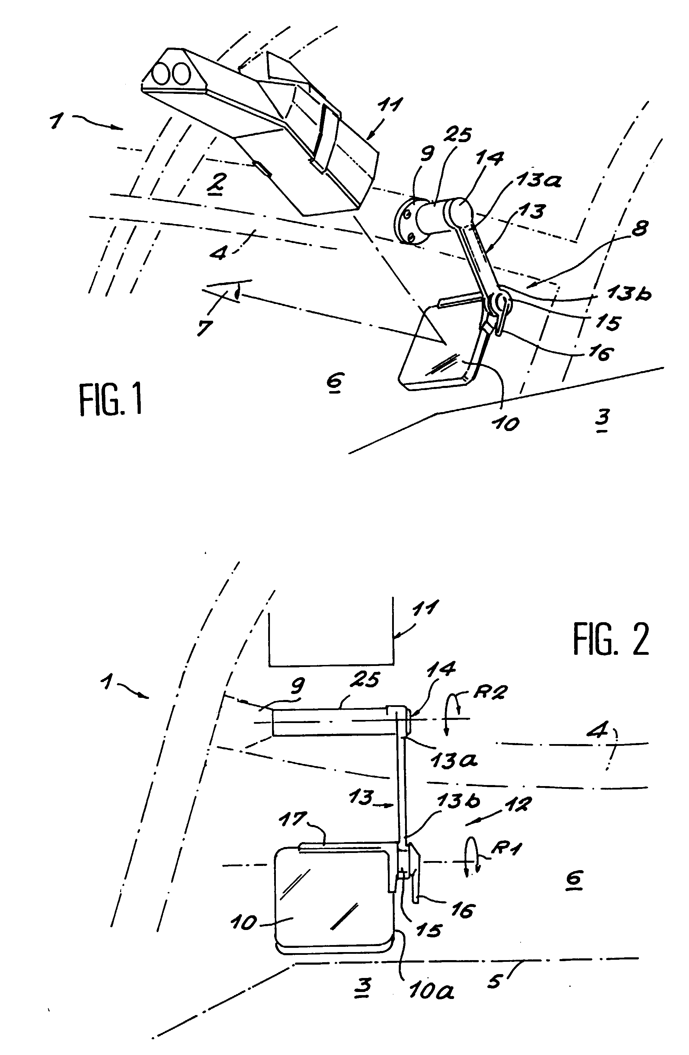

Les figures 1 et 2 représentent schématiquement une cabine de pilotage 1 désignée globalement et dans laquelle un plafond 2 et un poste de pilotage 3 délimitent respectivement une limite de visibilité supérieure 4 et inférieure 5 définissant un champ de vision 6 de l'oeil 7 du pilote.

Conformément à l'invention, la cabine de pilotage 1 est équipée d'un combineur holographique escamotable 8 monté en plafond 2 par l'intermédiaire d'une partie fixe 9.

Le combineur 8 comporte une glace holographique mobile 10, placée devant les yeux 7 du pilote et destinée à la présentation d'images lumineuses collimatées à l'infini en superposition sur le paysage extérieur et issue d'un projecteur 11, disposé en amont dudit combineur 8.

La glace holographique 10 est reliée à la partie fixe 9 par l'intermédiaire d'un support articulé 12 assurant son maintien et son positionnement.

Le support 12 de la glace holographique 10 est constitué par un bras de liaison unique 13 comportant une première articulation supérieure 14 le reliant, par l'une de ses extrémités 13a, à la partie fixe 9 de l'aéronef et une seconde articulation inférieure 15 reliant ledit bras 13, par son autre extrémité 13b, à une partie supérieure d'un côté latéral 10a de la glace holographique 10.

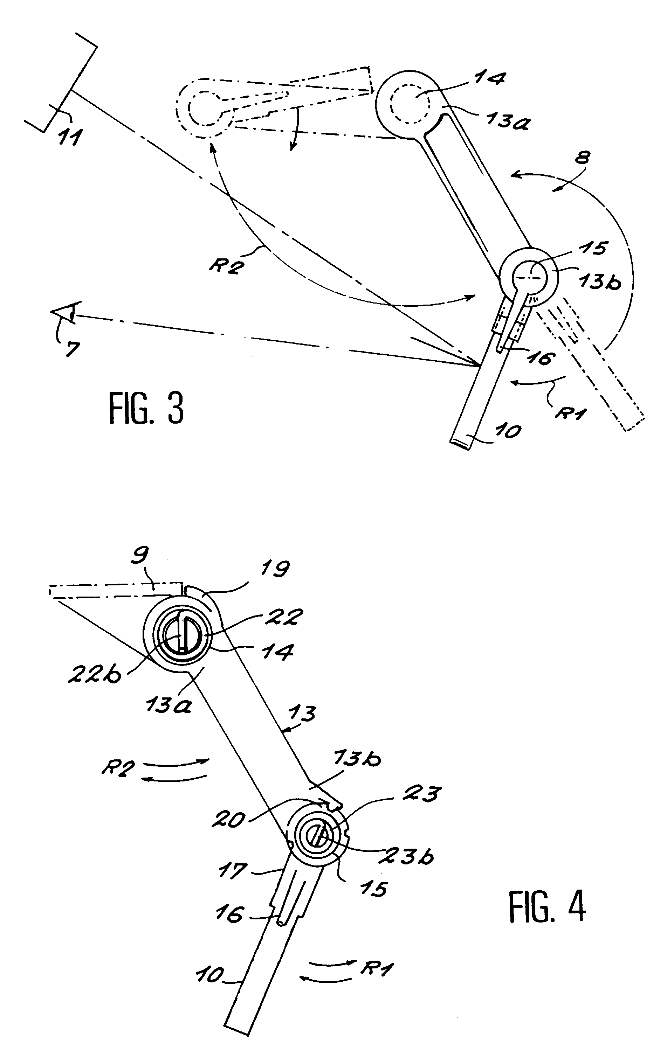

Comme le montre particulièrement bien la figure 3, un tel dispositif selon l'invention permet d'obtenir un escamotage complet de l'ensemble du combineur 8 par rotation selon R1 de la glace holographique 10 sur elle-même autour de l'articulation inférieure 15 du bras 13 d'une part, et cela jusqu'à ce que ce dernier se confonde avec le côté latéral 10a de la glace holographique 10, et d'autre part par rotation selon R2 dudit bras 13 autour de son articulation supérieure 14 jusqu'à ce qu'il soit complètement relevé hors du champ de vision extérieur du pilote.

Le reploiement du bras 13 et de la glace holographique 10 pour une position rangée, et inversement leur déploiement pour une position opérationnelle, peut s'effectuer par rotation préalable selon R1 de la glace holographique 10 par rapport au bras 13 puis par rotation selon R2 de ce dernier par rapport à la partie fixe 9 autour de leur articulation respective 15, 14, ou peut également s'effectuer par mouvement simultané selon R1 et R2 de la glace holographique 10 et du bras 13.

Quelle que soit la manière d'opérer, le combineur 8 est manoeuvré par l'intermédiaire d'une poignée de préhension 16 également unique à partir d'une seule prise en main selon un mouvement naturel du bras du pilote.

Selon une autre caractéristique de l'invention, la poignée de préhension 16, agissant en manoeuvre sur l'ensemble glace holographique 10 - bras de liaison 13, est directement reliée à l'articulation 15 de la glace holographique qui traverse l'extrémité inférieure 13a dudit bras 13, de manière que le bras unique 13 et la poignée unique 16 ne provoquent qu'un masquage visuel minimum lorsque l'ensemble est déployé.

La poignée 16 est reliée à la glace holographique 10 par l'intermédiaire d'une équerre de maintien 17 disposée dans son angle supérieur droit, par exemple, et solidarisée de l'articulation inférieure 15 pour un système vis-écrou 18.

Selon une autre caractéristique de l'invention, les débattements du bras de liaison 13 par rapport à la partie fixe 9 de l'aéronef et de la glace holographique 10 par rapport audit bras 13 autour de leurs articulations respectives supérieure 14 et inférieure 15 sont limités angulairement, de manière à assurer une bonne répétitivité de mise en place de la glace holographique 10 par rapport au projecteur d'images 11.

Concrètement, (voir figure 4), la limitation des débattements angulaires du bras de liaison 13 par rapport à la partie fixe 9 de l'aéronef et de la glace holographique 10 par rapport audit bras 13, est obtenue par l'intermédiaire de butées 19,20 respectivement disposées entre la partie fixe 9 de l'aéronef et l'extrémité supérieure 13a du bras 13 et entre la partie inférieure 13b du bras 13 et le côté latéral de la glace holographique 10.

De cette manière, (voir figure 4), le débattement angulaire du bras de liaison 13 lors du déploiement de l'ensemble vers une position opérationnelle s'effectue par un mouvement de rotation R2 du bras allant du haut vers le bas jusqu'à ce que sa butée 19 vienne en contact avec la partie fixe 9 alors que la mise en butée de la glace holographique 10 par rapport au bras 13 s'effectue par un mouvement rotatif R1 inverse au précédent dirigé vers le pilote, de manière que l'escamotage de la glace holographique 10 s'effectue en sens inverse, donc vers l'avant, en cas de choc.

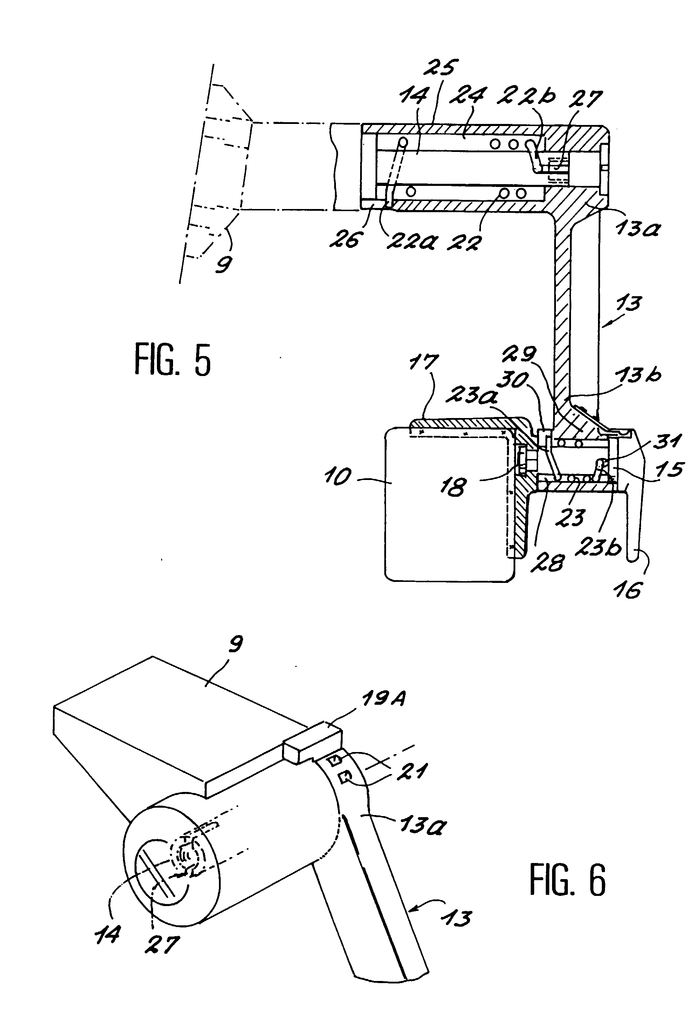

Selon un mode de réalisation particulier de l'invention (voir figure 6), la butée supérieure 19a est constituée par un taquet amovible engagé dans un logement 21 choisi en fonction de la position angulaire du bras 13 à obtenir, par rapport à la partie fixe 9.

Les logements 21 sont réalisés sur une partie externe de l'extrémité 13a du bras 13 à proximité de son articulation 14.

Selon une autre caractéristique de l'invention (voir figure 5 et 6), des ressorts de rappel 22,23 sont interposés entre, d'une part, la partie fixe 9 et le bras de liaison 13 et, d'autre part, entre ledit bras 13 et la glace holographique 10 de manière à assurer leur maintien en butée respectif, dans une position opérationnelle, un organe de verrouillage (non représenté) assurant par ailleurs l'annulation de l'effet des ressorts 22,23, dans une position rangée .

Selon le mode de réalisation représenté sur les figures, le ressort 22 est compressible en rotation lors du rangement pour se détendre en position opérationnelle du combineur. Il en est de même pour le ressort 23.

Comme le montre également les figures, le ressort 22 est logé dans un fourreau 24 d'un prolongement perpendiculaire 23 du bras 13 dans lequel est logé l'articulation 14, en fait un axe cylindrique.

Les extrémités 22a et 22b du ressort 22, sont respectivement ancrées dans des logements 26,27 ménagés respectivement sur la partie fixe 9 et sur l'extrémité opposée de l'axe d'articulation 14.

De la même manière, le ressort 23 est logé dans un fourreau 28 réalisé dans un moyeu 29 du bras 13 dans lequel est logée l'articulation 15 qui est également un axe cylindrique.

Dans ce cas, les extrémités 23a et 23b sont respectivement ancrées dans des logements 30 et 31 ménagés respectivement sur une partie du moyeu 29 du bras 13 et sur l'extrémité opposée de l'axe d'articulation 15.

## Revendications

1. Combineur holographique escamotable (8), notamment pour aéronef, du type comportant une glace holographique mobile (10) placée devant les yeux du pilote et destinée à la présentation d'images lumineuses collimatées à l'infini en superposition sur le paysage extérieur et issues d'un projecteur (11) disposé en amont dudit combineur, laquelle glace holographique (10) est reliée à une partie fixe (9) de l'aéronef par l'intermédiaire d'un support articulé (12) assurant son maintien et son positionnement, caractérisé en ce que le support (12) de glace holographique (10) est constitué par un bras de liaison unique (13) disposé latéralement à la glace, ledit bras comportant une première articulation supérieure (14) le reliant par l'une de ses extrémités (13a) à la partie fixe (9) de l'aéronef et une seconde articulation inférieure (15) reliant ledit bras (13) par son autre extrémité (13b) à un côté (10a) de la glace holographique (10) de manière à obtenir un escamotage complet de l'ensemble par rotation (R1) de la glace holographique (10) sur elle-même autour de l'articulation inférieure (15) du bras (13), effectuée préalablement ou simultanément à la rotation dudit bras autour de son articulation supérieure, jusqu'à ce qu'il se confonde avec le côté latéral de la glace holographique d'une part et qu'il soit complètement relevé hors du champ de vision extérieur du pilote d'autre part, un tel reploiement du bras et de la glace pour une position rangée et inversement leur déploiement pour une position opérationnelle s'effectuant par l'intermédiaire d'une poignée de préhension également unique apte à être manoeuvrée d'une seule main.

2. Combineur selon la revendication 1, caractérisé en ce que la poignée de préhension (16) agissant en manoeuvre sur l'ensemble glace holographique (10) - bras de liaison (13), est directement reliée à l'articulation (15) de la glace holographique qui traverse l'extrémité inférieure (13a) dudit bras (13), de manière que le bras unique (13) et la poignée unique (16) ne provoque qu'un masquage visuel minimum lorsque l'ensemble est déployé.

3. Combineur selon la revendication 1, caractérisé en ce que les débattements du bras de liaison (13) par rapport à la partie fixe (9) de l'aéronef et de la glace holographique (10) par rapport audit bras (13) autour de leurs articulations respectives supérieure (14) et inférieure (15) sont limités angulairement, de manière à assurer une bonne répétitivité de mise en place de la glace holographique (10) par rapport au projecteur d'images (11).

4. Combineur selon la revendication 3, caractérisé en ce que la limitation des battements angulaires du bras de liaison (13) par rapport à la partie fixe (9) de l'aéronef et de la glace holographique (10) par rapport audit bras (13), est obtenue par l'intermédiaire de butées (19,20) respectivement disposées entre la partie fixe (9) de l'aéronef et l'extrémité supérieure (13a) du bras (13) et entre la partie inférieure (13b) du bras (13) et le côté latéral de la glace (10).

5. Combineur selon la revendication 3 ou 4, caractérisé en ce que le débattement angulaire du bras de liaison (13) lors du déploiement de l'ensemble vers une position opérationnelle s'effectue par un mouvement de rotation (R2) du bras allant du haut vers le bas jusqu'à ce que sa butée (19) vienne en contact avec la partie fixe (9) alors que la mise en butée de la glace holographique (10) par rapport au bras (13) s'effectue par un mouvement rotatif (R1) inverse au précédent dirigé vers le pilote, de manière que l'escamotage de la glace holographique (10) s'effectue en sens inverse, donc vers l'avant, en cas de choc.

6. Combineur selon la revendication 4 ou 5, caractérisé en ce que des ressorts de rappel (22,23) sont interposés entre, d'une part, la partie fixe (9) et le bras de liaison (13) et d'autre part entre ledit bras (13) et la glace (10) de manière à assurer leur maintien en butée respectif, dans une position opérationnelle, un organe de verrouillage assurant par ailleurs l'annulation de l'effet des ressorts (22,23), dans une position rangée.

## Patentansprüche

1. Holographischer, wegklappbarer Kombinierer (8) für insbesondere Flugzeuge, mit einem beweglichen holographischen Spiegel (10), der vor den Augen des Piloten angeordnet ist und zur Präsentation von Leuchtbildern dient, die im Unendlichen mit der umgebenden Landschaft zusammenfallen und von einem Projektor (11) abgegeben werden, der oberhalb des Kombinierers angeordnet ist, wobei der holographische Spiegel (10) durch einen beweglichen Träger (12), der dessen Halt und Einstellung gewährleistet, mit einem festen Teil (9) des Flugzeugs verbunden ist, dadurch gekennzeichnet, daß der Träger (12) des holographischen Spiegels (10) aus lediglich einem seitlich des Spiegels angeordneten Verbindungsarm (13) besteht, der ein erstes, oberes Gelenk (14) umfaßt, welches diesen an einem seiner Enden (13a) mit dem festen Teil (9) des Flugzeugs verbindet, sowie ein zweites, unteres Gelenk (15), welches den Arm (13) an seinem anderen Ende (13b) mit einer Seite (10a) des holographischen Spiegels (10) verbindet, um eine vollständige Wegklappbarkeit der Anordnung durch Drehen (R1) des holographischen Spiegels (10) auf sich selbst um das untere Gelenk (15) des Arms (13) zu erhalten, welches Drehen vor oder gleichzeitig mit der Drehung des Arms um dessen oberes Gelenk erfolgt, bis er einerseits mit der seitlichen Seite des holographischen Spiegels verschmilzt und andererseits vollständig aus dem Sichtfeld des Piloten nach außen entfernt ist, wobei ein dergestaltes Zusammenklappen des Armes und des Spiegels in eine Bereitschaftsstellung und umgekehrt in ihre Betriebsstellung mittels eines Handgriffs erfolgen, der ebenfalls nur mit lediglich einer Hand bedienbar ist.

2. Kombinierer nach Anspruch 1, dadurch gekennzeichnet, das der Handgriff (16), der bei seiner Betätigung auf die Anordnung holographischer Spiegel (10)-Verbindungsarm (13) wirkt, dergestalt direkt mit dem Gelenk (15) des holographischen Spiegels verbunden ist, welches durch das untere Ende (13a) des Armes (13) verläuft, daß der lediglich eine Arm (13) und der lediglich eine Griff (16) nur eine minimale Sichtverdeckung hervorrufen, wenn die Anordnung eingeklappt ist.

3. Kombinierer nach Anspruch 1, dadurch gekennzeichnet, daß die Verschiebewege des Verbindungsarms (13) in Bezug auf den festen Teil (9) des Flugzeugs und des holographischen Spiegels (10) in Bezug auf den Arm (10) um ihr oberes (14) bzw. unteres (15) Gelenk dergestalt winkelbegrenzt sind, daß eine gute Wiederholbarkeit der Positionierung des holographischen Spiegels (10) bezüglich des Bildprojektors (11) gewährleistet wird.

4. Kombinierer nach Anspruch 3, dadurch gekennzeichnet, daß die Winkelbegrenzung der Hin- und Herbewegung des Verbindungsarmes (13) in Bezug auf den festen Teil (9) des Flugzeugs und des holographischen Spiegels (10) in Bezug auf diesen Arm (13) durch Anschläge (19, 20) erzielt wird, die jeweils zwischen dem festen Teil (9) des Flugzeugs und dem oberen Ende (13a) des Arms (13) sowie zwischen dem unteren Ende des Arms (13) und der seitlichen Seite des Spiegels (10) angeordnet sind.

5. Kombinierer nach Anspruch 3 oder 4, dadurch gekennzeichnet, daß die winkelverschiebung des Verbindungsarms (13) beim Ausklappen der Anordnung in eine Betriebsstellung durch eine Drehbewegung (R2) des Arms erfolgt, die von oben nach unten verläuft, bis dessen Anschlag (19) gegen den festen Teil (9) anliegt, während das Verfahren des holographischen Spiegels (10) gegen den Anschlag in Bezug auf den Arm (13) durch eine gegenüber der vorangehenden umgekehrte, zu dem Piloten hin gerichtete Drehbewegung (R1) erfolgt, so daß der holographische Spiegel (10) im Falle eines Stoßes in umgekehrter Richtung, d.h. nach vorne, wegklappt.

6. Kombinierer nach Anspruch 4 oder 5, dadurch gekennzeichnet, daß Rückholfedern (22, 23) dergestalt zwischen einerseits dem festen Teil (9) und dem Verbindungsarm (13) und andererseits zwischen dem Arm (13) und dem Spiegel (10) angeordnet sind, daß in einer Betriebsstellung ihr Anliegen gegen den jeweiligen Anschlag gewährleistet ist, wobei ein Verriegelungsorgan darüber hinaus die Wirkung der Federn (22, 23) in einer Bereitschaftsstellung aufhebt.

## Claims

1. Fold-away holographic combiner (8), in particular for aircraft and of the type having a movable holographic mirror (10) positioned in front of the pilot's eyes and designed to display luminous images collimated to infinity super-imposed on the outside landscape and provided by a projector (11) arranged upstream of the said combiner, the holographic mirror (10) of which is linked to a fixed member (9) of the aircraft by means of an articulated support (12) for the retaining and positioning thereof, characterised in that the support (12) for the holographic mirror (10) consists of a single linking arm (13) arranged laterally to the mirror, the said arm having a first, upper articulated joint (14) linking it by one of its ends (13a) to the fixed member (9) of the aircraft and a second, lower articulated joint (15) linking the said arm (13) by its other end (13b) to a side (10a) of the holographic mirror (10) such that the unit as a whole can be fully folded away by rotating (R1) the holographic mirror (10) on itself about the lower articulated joint (15) of the arm (13), before or simultaneously with a rotation of the said arm about its upper articulated joint until it is in line with the lateral edge of the holographic mirror on the one hand and until it is fully raised above the external field of vision of the pilot on the other, this redeployment of the arm and the mirror into a fold-away position and conversely the deployment thereof into an operational position being effected by means of a gripping handle, of which there is likewise only one, designed to be operated by a single hand.

2. Combiner as claimed in claim 1, characterised in that when being operated to manoeuvre the holographic mirror (10) and the linking arm (13) together as a unit, the gripping handle (16) is directly joined to the articulated joint (15) of the holographic mirror which moves across the lower end (13a) of the said arm (13) such that the single arm (13) and the single grip (16) cause only a minimum visual obstruction when the unit is deployed.

3. Combiner as claimed in claim 1, characterised in that the displacement of the linking arm (13) relative to the fixed member (9) of the aircraft and that of the holographic mirror (10) relative to the said arm (13) about their respective upper (14) and lower (15) articulated joints are angularly restricted so as to ensure good positioning repeatability of the holographic mirror (10) relative to the image projector (11).

4. Combiner as claimed in claim 3, characterised in that the angular displacement of the linking arm (13) relative to the fixed member (9) of the aircraft and that of the holographic mirror (10) relative to the said arm (31) are restricted by means of stops (19, 20) arranged respectively between the fixed member (9) of the aircraft and the upper end (13a) of the arm (13) and between the lower part (13b) of the arm (13) and the lateral edge of the mirror (10).

5. Combiner as claimed in claim 3 or 4, characterised in that when the unit is being deployed into an operational position, the linking arm (13) is angularly displaced by moving the arm in rotation (R2) from the top downwards until its stop (19) comes into contact with the fixed member (9) whilst the holographic mirror (10) is placed in a stop position relative to the arm (13) by a movement of rotation (R1) which is the reverse of the previous movement directed towards the pilot such that the holographic mirror (10) is pulled out in the opposite direction, hence forwards, in the event of shock.

6. Combiner as claimed in claim 4 or 5, characterised in that return springs (22, 23) are inserted between the fixed member (9) and the linking arm (13) on the one hand and between the said arm (13) and the mirror (10) on the other, such that these are retained at the respective stops in an operational position, a locking member being provided to disable the springs (22, 23) in a fold-away position.
